(19) Europäisches Patentamt / European Patent Office / Office européen des brevets

(11) **EP 1 604 435 B1**

(12) **FASCICULE DE BREVET EUROPEEN**

(45) Date de publication et mention
de la délivrance du brevet:
**18.11.2009 Bulletin 2009/47**

(51) Int Cl.:
***H01S 3/106*** (2006.01)

(21) Numéro de dépôt: **04716625.1**

(86) Numéro de dépôt international:
**PCT/FR2004/000491**

(22) Date de dépôt: **03.03.2004**

(87) Numéro de publication internationale:
**WO 2004/082083 (23.09.2004 Gazette 2004/39)**

(54) **PROCEDE ET DISPOSITIF POUR LE CONTROLE DE L'AMPLITUDE DU SPECTRE EN LONGUEURS D'ONDES DES IMPULSIONS LUMINEUSES ULTRA-BREVES EMISES PAR LES AMPLIFICATEURS LASERS A PASSAGES MULTIPLES**

VERFAHREN UND VORRICHTUNG ZUR REGELUNG DER AMPLITUDE EINES WELLELÄNGENSPEKTRUMS DER ULTRAKURZEN LICHTIMPULSE DES MULTIPASS-LASERVERSTÄRKERSYSTEMS

METHOD AND DEVICE FOR CONTROLLING THE AMPLITUDE OF THE WAVELENGTH SPECTRUM OF ULTRA-SHORT LIGHT PULSES EMITTED BY MULTIPASS LASER AMPLIFIERS

(84) Etats contractants désignés:
**AT BE BG CH CY CZ DE DK EE ES FI FR GB GR HU IE IT LI LU MC NL PL PT RO SE SI SK TR**

(30) Priorité: **03.03.2003 FR 0302667**

(43) Date de publication de la demande:
**14.12.2005 Bulletin 2005/50**

(73) Titulaire: **Fastlite**
**91194 Saint Aubin Cedex (FR)**

(72) Inventeurs:
• **KAPLAN, Daniel**
**F-75006 Paris (FR)**
• **OKSENHENDLER, Thomas**
**F-91940 Gometz le Chatel (FR)**
• **TOURNOIS, Pierre**
**F-06800 Cagnes S/Mer (FR)**

(74) Mandataire: **de Saint-Palais, Arnaud Marie**
**Cabinet Moutard**
**35 Rue de la Paroisse**
**B.P. 20513**
**78005 Versailles Cedex (FR)**

(56) Documents cités:
| FR-A- 2 684 194 | FR-A- 2 751 094 |
| FR-A- 2 810 750 | FR-A- 2 820 837 |
| US-A- 3 644 015 | US-A- 4 017 807 |
| US-A- 4 685 772 | US-A- 6 072 813 |

• KAPLAN D ET AL: "THEORY AND PERFORMANCE OF THE ACOUSTO OPTIC PROGRAMMABLE DISPERSIVE FILTER USED FOR FEMTOSECOND LASER PULSE SHAPING" JOURNAL DE PHYSIQUE IV, EDITIONS DE PHYSIQUE. LES ULIS CEDEX, FR, vol. 12, 2002, pages 69-75, XP001156188 ISSN: 1155-4339 cité dans la demande
• VERLUISE F ET AL: "AMPLITUDE AND PHASE CONTROL OF ULTRASHORT PULSES BY USE OF AN ACOUSTO-OPTIC PROGRAMMABLE DISPERSIVE FILTER: PULSE COMPRESSION AND SHAPING" OPTICS LETTERS, OPTICAL SOCIETY OF AMERICA, WASHINGTON, US, vol. 25, no. 8, 15 avril 2000 (2000-04-15), pages 575-577, XP000951947 ISSN: 0146-9592
• VERLUISE F ET AL TINGYE LI: "ACOUSTO-OPTIC FILTER FOR FEMTOSECOND LASER PULSE SHAPING, GAIN NARROWING AND PHASE DISTORTION COMPENSATION" CONFERENCE ON LASERS AND ELECTRO-OPTICS. (CLEO 2000). TECHNICAL DIGEST. POSTCONFERENCE EDITION. SAN FRANCISCO, CA, MAY 7 - 12, 2000, TRENDS IN OPTICS AND PHOTONICS. (TOPS), NEW YORK, NY : IEEE, US, vol. 39, 7 mai 2000 (2000-05-07), pages 442-443, XP000992325 ISBN: 0-7803-5990-9

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- TOURNOIS P: "NEW DIFFRACTION GRATING PAIR WITH VERY LINEAR DISPERSION FOR LASER PULSE COMPRESSION" 5 août 1993 (1993-08-05), ELECTRONICS LETTERS, IEE STEVENAGE, GB, PAGE(S) 1414-1415 , XP002028716 ISSN: 0013-5194 le document en entier
- TOURNOIS P: "Acousto-optic programmable dispersive filter for adaptive compensation of group delay time dispersion in laser systems" OPTICS COMMUNICATIONS, NORTH-HOLLAND PUBLISHING CO. AMSTERDAM, NL, vol. 140, no. 4-6, 1 août 1997 (1997-08-01), pages 245-249, XP004082630 ISSN: 0030-4018
- SERES E ET AL: "GENERATION OF INTENSE 8 FS LASER PULSES" OPTICS EXPRESS, OPTICAL SOCIETY OF AMERICA, WASHINGTON, DC,, US, vol. 11, no. 3, 10 février 2003 (2003-02-10), pages 240-247, XP001156641 ISSN: 1094-4087
- BOYLE M ET AL: "Amplitude and phase shaping in a high average power 1kHz CPS-laser" CONFERENCE ON LASERS AND ELECTRO-OPTICS. (CLEO 2001). TECHNICAL DIGEST. POSTCONFERENCE EDITION. BALTIMORE, MD, MAY 6-11, 2001, TRENDS IN OPTICS AND PHOTONICS. (TOPS), US, WASHINGTON, WA : OSA, US, vol. VOL. 56, 6 mai 2001 (2001-05-06), pages 269-269, XP010559819 ISBN: 1-55752-662-1
- WATANABE A ET AL: "TeO2 acousto-optic tunable filter" JAPANESE JOURNAL OF APPLIED PHYSICS, PUBLICATION OFFICE JAPANESE JOURNAL OF APPLIED PHYSICS. TOKYO, JP, vol. 44, 1975, pages 127-131, XP002163143 ISSN: 0021-4922

**Description**

La présente invention concerne un procédé et un dispositif pour le contrôle de l'amplitude du spectre en longueurs d'ondes des impulsions lumineuses ultra brèves émises par les amplificateurs laser à passages multiples.

Ce procédé s'applique notamment aux amplificateurs laser à passages multiples de la lumière dans un cristal amplificateur dont les impulsions lumineuses amplifiées sont de durée comprise entre quelques femtosecondes et quelques picosecondes.

Une chaîne d'amplification laser comprend un oscillateur et un ou plusieurs amplificateurs ; dans le cas des chaînes laser à impulsions brèves, l'oscillateur doit être à large bande pour générer une impulsion brève de référence ; la bande passante de ladite impulsion de référence est réduite par les amplificateurs suite à un effet de réduction du gain sur les flancs du spectre de ladite impulsion de référence ; cet effet contribue à réduire le spectre en longueurs d'onde de l'impulsion au fil des passages multiples dans la chaîne amplificatrice ; l'impulsion en sortie des amplificateurs est donc plus longue que ladite impulsion de référence.

D'une façon générale, on sait que pour combattre cet effet de réduction du gain, il faut diminuer l'amplitude du spectre de l'impulsion de référence au centre de la bande passante ; ceci peut être réalisé au moyen d'un filtre fixe ou programmable placé entre l'oscillateur et le premier amplificateur ou dans l'amplificateur lui-même lorsque celui-ci est du type à passages multiples de l'impulsion lumineuse dans le cristal amplificateur.

La réduction de l'amplitude du spectre de l'impulsion initiale au centre de la bande passante, en amont de l'amplification, doit être d'autant plus importante que l'amplification postérieure est grande.

Il s'avère qu'un tel filtrage du spectre de l'impulsion initiale, même s'il permet de combattre la réduction de la bande passante et d'élargir le spectre de l'impulsion amplifiée, introduit par ailleurs des effets de phase indésirables dus au fait que la vitesse de propagation de la lumière dans le cristal amplificateur est légèrement plus lente lorsque l'énergie amplifiée est plus grande (effet de l'indice non linéaire du cristal amplificateur).

Ainsi, les longueurs d'onde de la lumière correspondantes aux deux extrémités du spectre ont des vitesses de propagation dans le cristal amplificateur plus lentes que celles situées dans la partie centrale dudit spectre. Il s'ensuit une distorsion de phase du 3ème ordre introduite par la forte modulation en amplitude du spectre filtré.

Lorsque le filtre est placé dans la cavité d'un amplificateur à passages multiples, l'impulsion lumineuse traverse N fois le cristal amplificateur avant d'être extraite ; dans cette configuration, la réduction d'amplitude du spectre de l'impulsion de référence, au centre de la bande passante peut être la racine Nème de la réduction d'amplitude correspondante à un seul passage.

En effet, si $g_1(\lambda)$ est la courbe de gain en fonction de la longueur d'onde correspondant au premier passage, $g_2(\lambda)$ la courbe de gain correspondant au 2ème passage, ..., $g_N(\lambda)$ la courbe de gain correspondant au Nème passage, la courbe de gain totale correspondant aux N passages est :

$$G(\lambda) = g_1(\lambda) \cdot g_2(\lambda) \ldots g_N(\lambda),$$

et, si les N passages sont identiques de gain $g(\lambda)$, alors $G(\lambda) = [g(\lambda)]^N$. Ainsi, une réduction de 10 déciBel au centre de la courbe de gain peut être obtenue grâce à 20 passages de 0,5 déciBel dans un amplificateur à passages multiples.

Cette solution impose toutefois que le filtre introduit dans la cavité de l'amplificateur, comporte une perte d'insertion aussi faible que possible afin de maintenir le gain de ladite cavité.

L'invention a pour objet d'éliminer toute réduction de gain importante au centre de la bande passante d'amplification ; elle propose, à cet effet, un procédé pour le contrôle de l'amplitude du spectre en longueurs d'ondes des impulsions lumineuses ultra brèves se propageant dans une chaîne d'amplification laser comportant dans la cavité laser d'un amplificateur (1) à passages multiples, un dispositif acousto-optique programmable apte à modifier l'amplitude du spectre d'une impulsion lumineuse à chacun de ses passages grâce à une interaction colinéaire ou quasi-linéaire dans un cristal acousto-optique biréfringent entre ladite impulsion lumineuse et un faisceau acoustique.

Selon l'invention, ce procédé est caractérisé en ce qu'il consiste à effectuer un filtrage exploitable sur le faisceau lumineux direct non diffracté résultant de l'interaction acousto-optique en appliquant au transducteur acoustique du dispositif acousto-optique un signal électrique émanant d'un générateur de signaux programmé par un calculateur de manière à compenser la bande passante introduite par l'amplificateur (1) à chacun des passages de ladite impulsion lumineuse.

D'une façon plus précise, cette fonction de filtrage programmable est basée sur une interaction acousto-optique colinéaire ou quasi-colinéaire dans un cristal acousto-optique biréfringent ; ledit cristal acousto-optique effectue pour des valeurs basses de densité de puissance acoustique une convolution entre l'amplitude d'un signal optique d'entrée et un signal $S(t/\alpha)$, où $S(t)$ est le signal acoustique proportionnel au signal électrique appliqué au transducteur piézoélectrique du dispositif et $\alpha$ un facteur d'échelle lié au rapport entre la vitesse du son et la vitesse de la lumière dans le matériau. Ladite convolution s'effectue sur la partie diffractée du faisceau lumineux ; quant à la partie non diffractée, elle est affectée du complément à 1 du module de ladite convolution. En d'autres termes, il n'existe plus sur le trajet direct utile que la partie de l'énergie des longueurs d'onde qui n'a pas été diffractée sur le trajet diffracté. La faible valeur de $\alpha$ de l'ordre de $10^{-7}$, permet la commande des signaux optiques dans une gamme de la centaine de téra-Hertz avec un signal électrique dans une gamme de la dizaine de méga-Hertz.

L'interaction acousto-optique est réalisée de préférence dans un cristal de dioxyde de Tellure ($TeO_2$). Les directions de propagation des ondes optique et acoustique sont dans un plan P qui contient les axes du cristal [110] et [001]. Le vecteur d'onde acoustique K fait un angle $\theta_a$ avec l'axe [110]. La polarisation de l'onde acoustique est transversale, perpendiculaire au plan P, le long de l'axe [110].

$V(\theta_a)$, $V_{110}$ et $V_{001}$ étant les vitesses de phase de l'onde acoustique de cisaillement le long respectivement des directions $\theta_a$, [110] et [001], nous avons :

$$V^2(\theta_a) = V^2{}_{110} \cos^2 \theta_a + V^2{}_{001} \sin^2 \theta_a \text{ avec } V_{110} = 615 \text{ m/s et } V_{001} = 2100 \text{ m/s.}$$

En raison de la forte anisotropie élastique du cristal, la direction du vecteur K et la direction du vecteur de Poynting ne sont pas colinéaires. Le vecteur acoustique de Poynting fait un angle $\beta_a$ avec l'axe [110], défini par :

$$\tan \beta_a = (V_{001} / V_{110})^2 \cdot \tan \theta_a$$

Quand une onde optique ordinaire incidente, polarisée le long de la direction [$\bar{1}$10], avec un vecteur d'onde $k_o$ lequel fait un angle $\theta_o$ avec l'axe [110], interagit avec l'onde acoustique, une onde optique extraordinaire, polarisée dans le plan P avec un vecteur d'onde $k_d$, est diffractée avec un angle $\theta_d$ par rapport à l'axe [110]. Pour maximiser la longueur d'interaction pour une longueur de cristal donnée, afin de diminuer la puissance acoustique, le faisceau ordinaire incident sera aligné avec le vecteur de Poynting du faisceau acoustique.

Soit $n_o$ et ne les indices respectivement ordinaire et extraordinaire selon l'axe [110] et $n_d$ l'indice extraordinaire associé avec l'angle $\theta_d$ : l'anisotropie optique $\Delta n = (ne - n_o)$ étant généralement petite par rapport à $n_o$, les relations suivantes peuvent être obtenues au premier ordre en $\Delta n / n_o$ :

$$\delta n = n_d - n_o = \Delta n \cdot \cos^2 \theta_o$$

$$\theta_d - \theta_o = - [\Delta n / n_o] \cdot \cos^2 \theta_o \cdot \tan (\theta_o - \theta_a)$$

$$K = k_o \cdot [\Delta n / n_o] \cdot [\cos^2 \theta_o / \cos (\theta_o - \theta_a)]$$

Soit

$$\alpha = f/\nu = \Delta n \cdot [V(\theta_a) / c] \cdot [\cos^2 \theta_o / \cos (\theta_o - \theta_a)]$$

ou $\alpha$ est le rapport entre la fréquence acoustique $f$ et la fréquence optique $\nu$ et c la vitesse de la lumière.

La théorie et les performances du filtre dispersif programmable acousto-optique utilisé pour la mise en forme d'impulsions lumineuses ultra-brèves sont décrites dans l'article de D. Kaplan et P. Tournois, "Theory and performance of the acousto optic programmable dispersive filter used for femtosecond laser pulse shaping", paru dans la revue J.

Phys.IV France 12 (2002), Pr5-69/75.

Le brevet FR 2 810 750 A (FASLITE) - 28/12/2001, "Dispositif acousto-optique programmable pour le contrôle de l'amplitude du spectre en longueurs d'onde des systèmes de communications optiques multiplexés en longueur d'onde", propose notamment l'implantation d'un circuit de programmation de la modulation en amplitude et en fréquence ou en phase de l'onde acoustique, permettant ainsi d'obtenir trois ondes optiques de sortie : une onde directe de même polarisation que l'onde optique d'entrée et deux ondes diffractées de polarisations orthogonales, portant chacune une modulation en amplitude et en fréquence ou en phase de leur spectre qui est fonction à la fois de la modulation de l'onde optique d'entrée et de la modulation de l'onde acoustique. Ainsi le dispositif proposé permet de résoudre en particulier l'égalisation programmable de l'intensité lumineuse des signaux continus de polarisation quelconque et inconnus, issus des canaux optiques en aval des amplificateurs optiques à fibres dopées.

Le brevet US 3 644 015, John R. Hearn - 22/02/1972, "Acousto-optic band reject light filter and apparatus using same", propose un dispositif acousto-optique programmable permettant de réaliser un filtre réjecteur de lumière. Le procédé consiste en :

- l'excitation d'une onde acoustique dans un milieu optiquement anisotrope à une fréquence sélectionnée en fonction de la fréquence optique de la lumière à éliminer,
- la diffraction essentiellement colinéaire du faisceau lumineux par l'onde acoustique dans le milieu optiquement anisotrope en deux faisceaux de polarisations différentes,
- l'élimination de la lumière dans un des deux faisceaux diffractés tout en maintenant la lumière dans l'autre faisceau,
- la commande de la puissance acoustique appliquée en réponse à l'intensité de la lumière correspondant à la fréquence optique éliminée.

Ce procédé est appliqué notamment au traitement de faisceaux de lumière blanche ; il ne concerne pas de boucle de recirculation ; il permet de rejeter une longueur d'onde prédéterminée.

Le document Verluise, F. et al. - Optics letters, vol.25, no. 8, 15 avril 2000, pages 575-577: "Amplitude and phase control of ultrashort pulses by use of an acousto-optic programmable dispersive fileter", propose des résultats expérimentaux de traitement de la phase et de l'amplitude d'impulsions lumineuses ultra brèves au moyen d'un filtre dispersif programmable acousto-optique. Les expérimentations ont été effectuées sur une chaîne amplificatrice de type femtoseconde ; le dispositif acousto-optique utilisé est un cristal de dioxyde de Tellure équipé d'un transducteur acoustique de bande passante de 20 MHz autour de 52,5 MHz, ce qui se traduit par une largeur de bande optique de 150 THz autour de 375 THz ; la résolution obtenue est de 450 points pour un retard de temps de groupe de 3 picosecondes. Une autre application consiste à découper l'impulsion lumineuse incidente en plusieurs impulsions séparées dans les domaines spectral et temporel.

Le document Verluise, F. et al. - Conférence on lasers and electro-optics (CLEO 2000). Technical Digest, Postconference edition, San Fransisco, May 7-12, 2000, Trends in optics and photonics, (TOPS), IEEE, vol. 39, 7 mai 2000, pages 442-443, résume essentiellement les résultats obtenus, décrits dans le document cité précédemment.

Le dispositif selon l'invention est défini dans la revendication 6. Le procédé qui y est mis en oeuvre est défini dans la revendication 1.

Bien entendu, le dispositif de contrôle de l'amplitude du spectre en longueurs d'ondes des impulsions lumineuses ultra-brèves selon l'invention pourra comporter un circuit de programmation de la modulation en amplitude et en fréquence (ou en phase) de l'onde acoustique.

Ledit dispositif fournit deux ondes optiques de sortie : une onde directe non diffractée de même polarisation que l'onde optique d'entrée, et une onde diffractée de polarisation perpendiculaire à la polarisation de l'onde optique d'entrée ; les deux ondes portent une modulation en amplitude de leur spectre respectif qui est une fonction à la fois de la modulation de l'onde optique d'entrée et de la modulation de l'onde acoustique, sachant que la modulation du spectre de l'onde acoustique pourra être programmée de manière à modifier la forme du spectre des impulsions optiques en sortie de la chaîne d'amplification laser.

Seul le faisceau direct transmis non diffracté, portant le résultat de la modification recherchée du spectre de l'impulsion lumineuse, sera exploité ; en l'absence de signal acoustique, le faisceau direct ne subit aucune atténuation ; ceci est une condition nécessaire pour un fonctionnement satisfaisant de la chaîne d'amplification.

Selon une première variante de l'invention, le dispositif pourra comporter un circuit adaptatif comprenant une mesure du spectre optique à la sortie de la cavité de l'amplificateur et un circuit de contre-réaction agissant sur le circuit de programmation du dispositif afin de modifier la forme du spectre des impulsions lumineuses en sortie de la chaîne d'amplification laser, de sorte que ledit spectre soit conforme au gabarit souhaité.

Par ailleurs, le fait d'introduire dans la cavité d'amplification laser à passages multiples, un cristal acousto-optique fonctionnant en transmission sur le faisceau optique non diffracté, conduit à augmenter la dispersion de la cavité, ce qui a pour effet d'allonger l'impulsion à chaque passage dans le cristal. Cet effet d'allongement est très utile pour diminuer la puissance crête de l'impulsion lumineuse à amplifier ; néanmoins, en sortie de la dernière amplification, l'impulsion doit être comprimée.

La compression d'impulsions lumineuses par l'intermédiaire de prismes ou de réseaux compense principalement les dispersions linéaires (temps de groupe variant linéairement avec la fréquence) mais ne compense pas les dispersions non linéaires, notamment celles introduites par le cristal acousto-optique.

Selon une autre variante de l'invention, un train de deux prismes dont les sommets sont inversés par rapport à l'axe principal de la cavité d'amplification laser, est introduit entre le miroir de fond de ladite cavité et le cristal acousto-optique.

Selon une autre variante de l'invention, la fonction prismatique est intégrée dans le cristal acousto-optique lui-même, et l'autre prisme est accolé au dit miroir de fond de cavité d'amplification laser.

Avantageusement, dans le procédé et le dispositif précédemment décrits, le filtrage de l'amplitude du spectre de l'impulsion lumineuse pourra être programmé par un générateur, lequel sera piloté par un calculateur, de manière à compenser la réduction de la bande passante introduite par l'amplificateur à chacun des passages de ladite impulsion lumineuse.

Des modes de mise en oeuvre du procédé selon l'invention seront décrits ci-après, à titre d'exemples non limitatifs, avec référence aux dessins annexés dans lesquels :

La figure 1 est une représentation schématique d'une cavité d'amplification laser à passages multiples comportant le dispositif acousto-optique associé à un train de deux prismes de correction ;

La figure 2 est une représentation schématique d'une cavité d'amplification laser à passages multiples comportant la fonction prismatique de correction intégrée au dispositif acousto-optique et au miroir de fond de ladite cavité ;

La figure 3 est une vue en coupe d'un cristal acousto-optique biréfringent mettant en évidence l'interaction des ondes optiques et acoustiques ;

La figure 4 représente, à un facteur d'échelle près, les courbes des indices ordinaire et extraordinaire d'un cristal acousto-optique biréfringent uniaxe, ainsi que la courbe des lenteurs acoustiques (inverse des vitesses acoustiques) du cristal acousto-optique ;

La figure 5 représente les courbes de variation du temps de retard de groupe en fonction de la longueur d'onde de l'impulsion lumineuse pour différents paramètres dimensionnels du train des deux prismes.

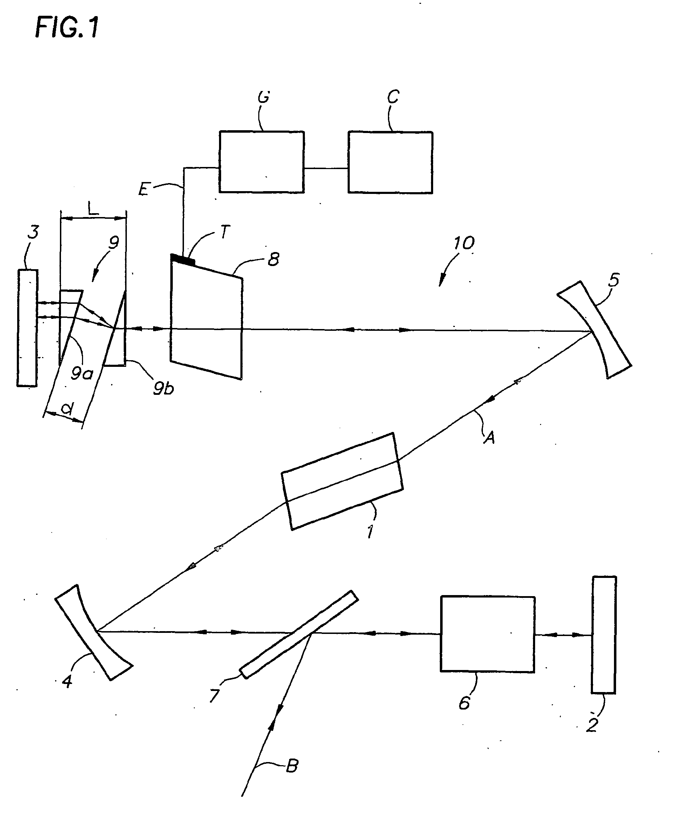

Dans l'exemple représenté sur la figure 1, le signal optique, sous forme d'impulsions ultra brèves, parcourt le trajet A à plusieurs reprises dans la cavité d'amplification laser 10 ; à chaque passage, le signal optique est amplifié dans l'amplificateur optique 1 et est réfléchi entre les miroirs de fond 2 et 3 de ladite cavité, ainsi que sur les miroirs intermédiaires 4 et 5.

Une cellule de Pockels 6 est centrée sur le trajet optique, associée à un polariseur 7, permettant d'introduire ou d'extraire le signal optique par permutation de la polarisation de l'onde optique.

Un dispositif acousto-optique 8, par exemple du type de ceux qui se trouvent décrits dans le brevet FR 2810750 déposé au nom de la Demanderesse qui font intervenir au moins un cristal acousto-optique biréfringent comprenant une face d'entrée Fe sur laquelle le signal optique est appliqué et une face de sortie Fs de laquelle sort le signal optique diffracté et le signal optique direct, selon une direction de passage et réciproquement lors du passage en sens inverse, et au moins un transducteur T sur lequel est appliqué un signal électrique E provenant d'un générateur de signaux G piloté par un calculateur C.

Dans le cristal acousto-optique biréfringent, la direction de propagation de l'énergie de l'onde acoustique peut être colinéaire ou quasi-colinéaire avec la direction de propagation de l'énergie de l'onde optique au niveau de leur zone d'interaction.

Parmi les divers cristaux qui peuvent être utilisés (tels que, par exemple, le Niobate de Lithium, le Molybdate de Calcium,...), le dioxyde de Tellure permet un rendement acousto-optique relativement élevé dans les conditions cités précédemment, dans le cas notamment d'une onde acoustique de cisaillement lente : ce matériau sera donc utilisé de préférence.

Enfin, un train 9 de deux prismes 9a et 9b est positionné sur le trajet du signal optique A, entre le miroir 3 de ladite cavité d'amplificateur laser et le dispositif acousto-optique 8 ; lesdits deux prismes sont disposés de telle sorte que les sommets sont inversés par rapport au trajet A du signal optique ; les deux faces perpendiculaires audit trajet A sont distantes de L ; les deux faces obliques audit trajet A sont distantes de d.

Ainsi, à chaque passage de l'impulsion lumineuse suivant le trajet, celle-ci sera amplifiée par l'amplificateur optique 1, filtrée par le dispositif acousto-optique 8 et corrigée par le train 9 de prismes.

La programmation par le calculateur C du générateur de signaux G permettra d'appliquer un signal électrique E au niveau du transducteur T permettant de modifier la forme du spectre des impulsions lumineuses en sortie de la cavité d'amplificateur 10, par l'intermédiaire de la cellule de Pockels 6 et du polariseur 7 suivant le trajet B.

La dite programmation du signal électrique E appliqué au transducteur T sera telle que le spectre en longueurs d'ondes des impulsions lumineuse ultra brèves soient conformes au gabarit souhaité.

La fonction prismatique, permettant de compenser les dispersions non linéaires introduites par le cristal acousto-optique, est assurée par le train 9 de deux prismes 9a, 9b.

Selon une variante de l'invention, la fonction prismatique pourra être intégrée dans le cristal acousto-optique d'une part, et d'autre part au niveau du miroir de fond de la cavité d'amplificateur laser.

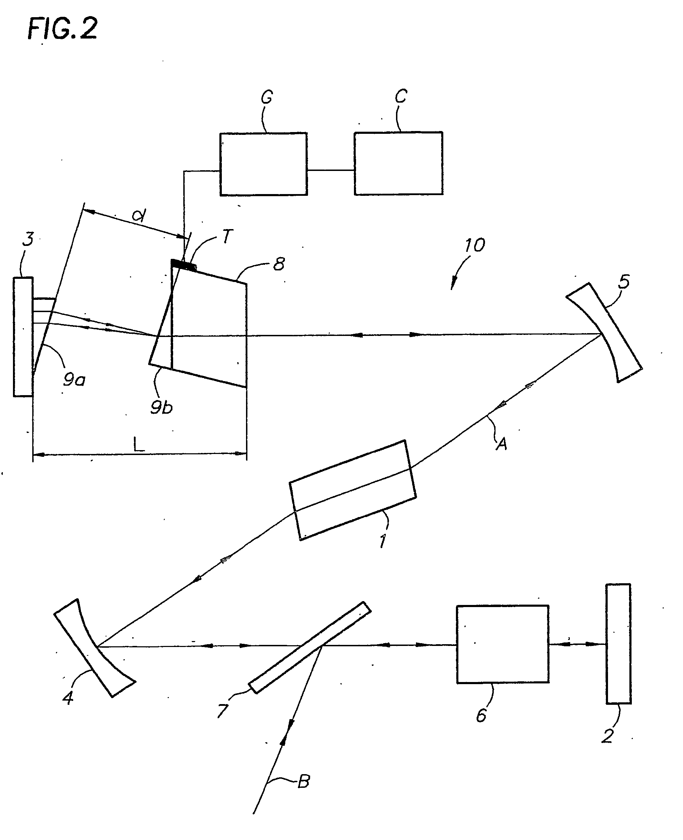

Ainsi, dans l'exemple représenté sur la figure 2, le prisme 9a est associé au miroir 3 de fond de cavité, et le prisme 9b est associé au cristal acousto-otique 8 ; avantageusement, le matériau constituant les prismes 9a et 9b seront de même nature que celui constituant le cristal acousto-optique 8.

Afin de maximiser la longueur d'interaction, pour une longueur de cristal donné, permettant ainsi de diminuer la puissance acoustique délivrée par le transducteur T, le faisceau optique sera aligné avec le vecteur de Poynting du faisceau acoustique.

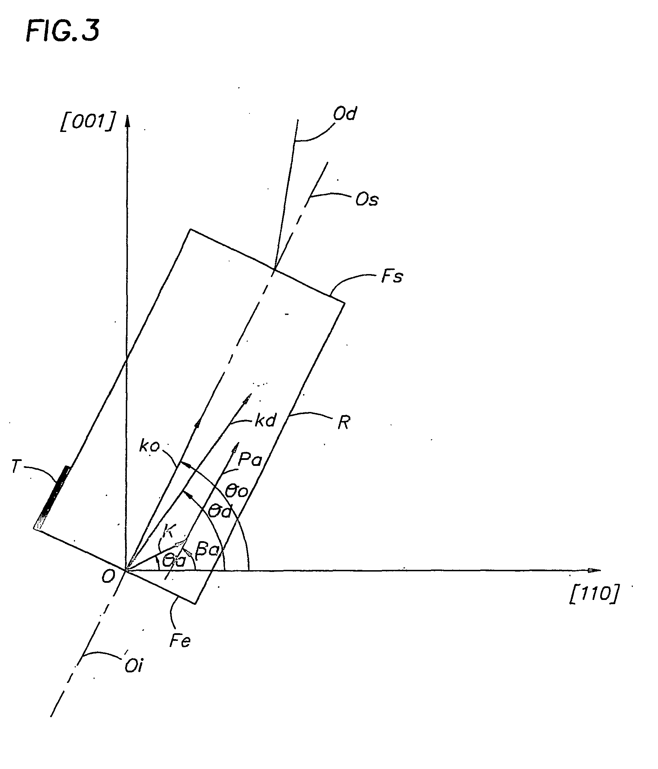

Dans l'exemple représenté sur la figure 3, le dispositif acousto-optique programmable fait intervenir un cristal acousto-optique représenté de façon schématique par un rectangle R et qui présente, sur un petit côté dudit rectangle, une face d'entrée Fe sur laquelle est appliqué, perpendiculairement à ladite face Fe, un faisceau optique incident $O_i$, polarisé perpendiculairement au plan P contenant ledit rectangle R.

Un transducteur T, situé sur un grand côté dudit rectangle R, génère un faisceau acoustique transverse, dont l'onde de cisaillement est polarisée perpendiculairement audit plan P, et dont le vecteur d'onde est désigné par K, situé dans ledit plan P.

Le faisceau optique incident $O_i$ se propage dans le cristal acousto-optique et ressort par une face de sortie Fs, située sur l'autre petit côté dudit rectangle, en deux faisceaux, un faisceau direct non diffracté $O_s$, perpendiculaire à la face de sortie Fs, et un faisceau extraordinaire diffracté $O_d$, non perpendiculaire à la face de sortie Fs.

Le plan P, étant orthonormé par les axes du cristal [110] et [001], respectivement suivant 0x et 0y, ledit cristal, représenté par le rectangle R est réalisé de telle manière que l'axe principal du rectangle fait un angle aigu avec ledit axe [110] du cristal.

L'onde acoustique est représentée par son vecteur d'onde K faisant un angle $\theta_a$ avec l'axe [110] du cristal et le vecteur de Poynting $P_a$, un angle $\beta_a$ avec l'axe [110].

L'onde optique incidente $O_i$ est dirigée perpendiculairement à la face d'entrée Fe du cristal ; son vecteur d'onde $k_o$ fait un angle $\theta_o$ avec l'axe [110] ; sa polarisation est perpendiculaire au plan P selon l'axe $[\overline{1}10]$.

Afin de maximiser l'interaction acousto-optique, l'angle $\theta_o$ que fait le vecteur d'onde $k_o$ avec l'axe [110] sera identique à l'angle $\beta_a$ que fait le vecteur de Poynting $P_a$ de l'onde acoustique avec l'axe [110].

L'onde optique incidente $O_i$ sera diffractée suivant une onde optique extraordinaire $O_d$, dont la polarisation est perpendiculaire à celle de l'onde optique incidente $O_i$, et dont le vecteur d'onde $k_d$ fait un angle $\theta_d$ avec l'axe [110].

Ainsi, le résultat du filtrage, effectué par le cristal acousto-optique, est exploité sur l'onde optique directe non diffractée $O_s$, de polarisation identique à celle de l'onde optique incidente $O_i$.

Le cristal, représenté par le rectangle R, est orienté de telle manière que l'angle $\theta_a$ que fait le vecteur d'onde acoustique K avec l'axe [110] soit compris entre 0° et 15°.

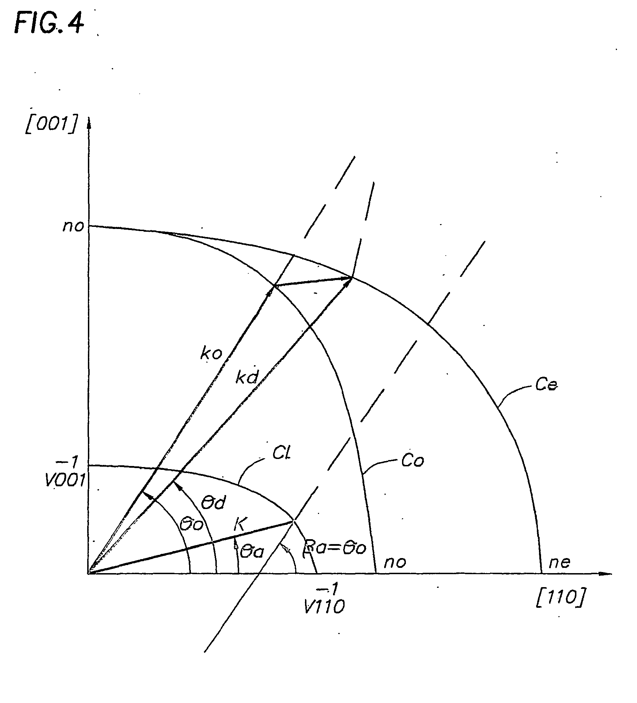

Les courbes des indices ordinaire et extraordinaire d'un cristal acousto-optique biréfringent uniaxe, ainsi que la courbe des lenteurs dudit cristal sont présentées sur la figure 4, dans le plan orthonormé par les axes [110] et [001].

Les courbes des indices $C_o$ et $C_e$ représentent respectivement la courbe d'indice ordinaire $n_o$ et la courbe d'indice extraordinaire $n_e$.

La courbe des lenteurs $C_L$ représente la variation de l'inverse de la vitesse de phase de l'onde acoustique de cisaillement.

Comme indiqué précédemment, le cristal est ainsi orienté de telle manière que le vecteur de Poynting de l'onde acoustique fait un angle $\beta_a$, par rapport à l'axe [110], identique à celui que fait le vecteur d'onde optique incident $k_o$, par rapport au même axe.

De manière à compenser la dispersion non linéaire (temps de retard de groupe variant non linéairement avec la fréquence) introduite par le dispositif acousto-optique 8, un train 9 de deux prismes est positionné, selon l'invention, entre ledit dispositif acousto-optique et le miroir 3 de fond de la cavité d'amplificateur laser 10. Les paramètres dimensionnels L et d définissent respectivement la distance qui séparent les deux faces dés prismes normales au trajet du signal optique A, et la distance qui séparent les deux faces obliques desdits prismes.

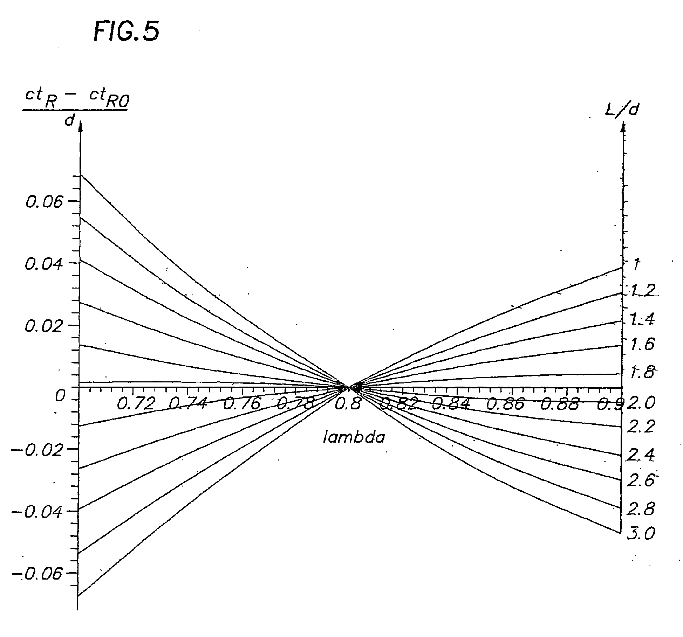

Comme indiqué sur la figure 5, conformément à la représentation schématique illustrée par la figure 2, le rapport L/d, variant de 1 à 3, définit une variation du temps de groupe, ramenée à la distance d, de +/- 0,06.

Ladite variation du temps de groupe est proche de zéro pour un rapport L/d situé entre 1,8 et 2.

Ainsi, les dispersions non linéaires seront compensées puisque la variation du temps de groupe est quasi-nulle pour une géométrie donnée du train de prismes.

**Revendications**

1. Procédé pour le contrôle de l'amplitude du spectre en longueurs d'ondes des impulsions lumineuses ultra brèves se propageant dans une chaîne d'amplification laser comportant dans la cavité laser (10) d'un amplificateur (1) à passages multiples, un dispositif acousto-optique programmable apte à modifier l'amplitude du spectre d'une impulsion lumineuse à chacun de ses passages grâce à une interaction colinéaire ou quasi-colinéaire dans un cristal acousto-optique biréfringent (8) entre ladite impulsion lumineuse et un faisceau acoustique, le procédé consistant à effectuer un filtrage sur la partie du faisceau lumineux direct non diffractée ($O_S$) lors de l'interaction acousto-optique en appliquant au transducteur acoustique piezoélectrique (T) du dispositif acousto-optique un signal électrique (E) émanant d'un générateur (G) programmé par un calculateur (C) de manière à compenser la réduction de la bande passante introduite par l'amplificateur (1) à chacun des passages de ladite impulsion lumineuse.

2. Procédé selon la revendication 1,
   **caractérisé en ce qu'**il comprend un circuit adaptatif comprenant une mesure du spectre optique à la sortie de la cavité (10) de l'amplificateur et un circuit de contre-réaction agissant sur le circuit de programmation comprenant le susdit générateur (G) piloté par le susdit calculateur (C), afin de modifier la forme du spectre des impulsions lumineuses en sortie de la chaîne d'amplification laser, de sorte que ledit spectre soit conforme au gabarit souhaité.

3. Procédé selon la revendication 1,
   **caractérisé en ce qu'**il comprend un train (9) de deux prismes (9a, 9b), dont les sommets sont inversés par rapport à l'axe principal de la cavité (10) d'amplification laser, ledit train, situé entre le miroir (3) de fond de ladite cavité (10) et le cristal acousto-optique (8), permettant de compenser les variations non linéaires du temps de groupe en fonction de la fréquence optique des impulsions lumineuses, introduites par ledit cristal acousto-optique (8).

4. Procédé selon la revendication 3,
   **caractérisé en ce que** le train (9) de deux prismes (9a, 9b), est intégré d'une part audit cristal acousto-optique (8) et d'autre part audit miroir (3) de fond de ladite cavité (10) d'amplification laser.

5. Procédé selon l'une des revendications précédentes,
   **caractérisé en ce que** le cristal acousto-optique (8) est un cristal de dioxyde de Tellure.

6. Dispositif pour la mise en oeuvre du procédé selon la revendication 1, pour le contrôle de l'amplitude du spectre en longueur d'ondes des impulsions ultra-brèves se propageant dans une chaine d'amplification laser comportant dans la cavité laser (10) d'un amplificateur (1) à passages multiples, un dispositif acousto-optique programmable, où:

   - ledit dispositif acousto-optique programmable est apte à modifier l'amplitude du spectre d'une impulsion lumineuse à chacun de ses passages grâce à une interaction colinéaire ou quasi-colinéaire dans un cristal acousto-optique biréfringent (8) entre ladite impulsion lumineuse et un faisceau acoustique; et où
   - ledit dispositif comprend un circuit de programmation du signal électrique (E) appliqué au transducteur acoustique piézoélectrique (T) du dispositif acousto-optique, ce circuit comportant un générateur (G) dudit signal électrique (E) piloté par un calculateur (C) de manière à effectuer un filtrage sur la partie du faisceau lumineux direct non diffractée ($O_S$) lors de l'interaction acousto-optique pour compenser la réduction de bande passante introduite par l'amplificateur (1) à chacun des passages de ladite impulsion lumineuse.

7. Dispositif selon la revendication 6,
   **caractérisé en ce qu'**il comprend un circuit adaptatif comprenant une mesure du spectre optique à la sortie de la cavité (10) de l'amplificateur et un circuit de contre-réaction agissant sur le circuit de programmation comprenant le susdit générateur (G) piloté par le susdit calculateur (C), afin de modifier la forme du spectre des impulsions lumineuses en sortie de la chaîne d'amplification laser, de sorte que ledit spectre soit conforme au gabarit souhaité.

8. Dispositif selon la revendication 6,
   **caractérisé en ce qu'**il comprend un train (9) de deux prismes (9a, 9b) dont les sommets sont inversés par rapport à l'axe principal de la cavité (10) d'amplification laser, ledit train, situé entre le miroir (3) de fond de ladite cavité (10) et le cristal acousto-optique (8), permettant de compenser les variations non linéaires du temps de groupe en fonction de la fréquence optique des impulsions lumineuses, introduites par ledit cristal acousto-optique (8).

9. Dispositif selon la revendication 8,
   **caractérisé en ce que** le train (9) de deux prismes (9a, 9b) est intégré, d'une part, audit cristal acousto-optique (8) et, d'autre part, audit miroir (3) de fond de ladite cavité (10) d'amplification laser.

10. Dispositif selon l'une des revendications 8 et 9,
**caractérisé en ce que** le cristal acousto-optique (8) est un cristal de dioxyde de Tellure.

**Claims**

1. Method for controlling the amplitude of the wavelength spectrum of the ultra-short light pulses propagating in a laser amplification chain comprising in the laser cavity (10) of a multiple-pass amplifier (1), a programmable acousto-optical device able to modify the amplitude of the spectrum of a light pulse at each of its passes by virtue of a collinear or quasi-collinear interaction in a birefringent acousto-optical crystal (8) between said light pulse and an acoustic beam,
   the method consisting of performing a filtering on the part of the non-diffracted direct light beam ($O_s$) during the acousto-optical interaction by applying to the piezoelectric acoustic transducer (T) of the acousto-optical device an electrical signal (E) emanating from a generator (G) programmed by a computer (C) so as to compensate for the reduction in the bandwidth introduced by the amplifier (1) at each of the passes of said light pulse.

2. Method according to claim 1,
   **characterised in that** it comprises an adaptive circuit comprising a measurement of the optical spectrum at the exit from the cavity (10) of the amplifier and a feedback circuit acting on the programming circuit comprising the aforementioned generator (G) controlled by the aforementioned computer (C), in order to modify the form of the spectrum of the light pulses at the exit from the laser amplification chain, so that said spectrum is in conformity with the required pattern.

3. Method according to claim 1,
   **characterised in that** it comprises a set (9) of two prisms (9a, 9b), the vertices of which are inverted with respect to the principal axis of the laser amplification cavity (10), said set, situated between the bottom mirror (3) of said cavity (10) and the acousto-optical crystal (8), compensating for the nonlinear variations in the group time as a function of the optical frequency of the light pulses, introduced by said acousto-optical crystal (8).

4. Method according to claim 3,
   **characterised in that** the set (9) of two prisms (9a, 9b) is integrated firstly in said acousto-optical crystal (8) and secondly in said bottom mirror (3) of said laser amplification cavity (10).

5. Method according to one of the preceding claims,
   **characterised in that** the acousto-optical crystal (8) is a tellurium dioxide crystal.

6. Device for implementing the method according to claim 1, for controlling the amplitude of the wavelength spectrum of the ultra-short pulses propagating in a laser amplification chain comprising, in the laser cavity (10) of a multiple-pass amplifier (1), a programmable acousto-optical device, wherein:

   - said programmable acousto-optical device is able to modify the amplitude of the spectrum of a light pulse at each of its passes by virtue of a collinear or quasi-collinear interaction in a birefringent acousto-optical crystal (8) between said light pulse and an acoustic beam, and wherein
   said device comprises a circuit for programming the electrical signal (E) applied to the piezoelectric acoustic transducer (T) of the acousto-optical device, this circuit comprising a generator (G) of said electrical signal (E) controlled by a computer (C) so as to perform a filtering on the part of the non-diffracted direct light beam ($O_s$) during the acousto-optical interaction in order to compensate for the reduction in the bandwidth introduced by the amplifier (1) at each of the passes of said light pulse.

7. Device according to claim 6,
   **characterised in that** it comprises an adaptive circuit comprising a measurement of the optical spectrum at the exit from the cavity (10) of the amplifier and a feedback circuit acting on the programming circuit comprising the aforementioned generator (G) controlled by the aforementioned computer (C), in order to modify the form of the spectrum of the light pulses at the exit from the laser amplification chain, so that said spectrum is in conformity with the required pattern.

**8.** Device according to claim 6,
**characterised in that** it comprises a set (9) of two prisms (9a, 9b), the vertices of which are inverted with respect to the principal axis of the laser amplification cavity (10), said set, situated between the bottom mirror (3) of said cavity (10) and the acousto-optical crystal (8), compensating for the nonlinear variations in the group time as a function of the optical frequency of the light pulses, introduced by said acousto-optical crystal (8).

**9.** Device according to claim 8,
**characterised in that** the set (9) of two prisms (9a, 9b) is integrated firstly in said acousto-optical crystal (8) and secondly in said bottom mirror (3) of said laser amplification cavity (10).

**10.** Device according to one of claims 8 and 9,
**characterised in that** the acousto-optical crystal (8) is a tellurium dioxide crystal.

**Patentansprüche**

**1.** Verfahren zur Kontrolle der Breite des Wellenlängenspektrum der ultrakurzen Lichtimpulse, die sich in einer Laserverstärkungskette ausbreiten, umfassend, in dem Laser-Hohlraum (10) eines Verstärkers (1) mit mehreren Durchgängen, eine programmierbare akustisch-optische Vorrichtung, die zur Modifizierung der Breite des Spektrums eines Lichtimpulses an jedem von seinen Durchgängen auf Grund einer colinearen oder quasi-colinearen Wechselwirkung in einem akustisch-optischen Doppelbrechungskristall (8) zwischen dem Lichtimpuls und einem akustischen Strahl geeignet ist,
wobei das Verfahren besteht aus der Durchführung einer Filterung an dem Anteil des direkten nicht gebrochenen Lichtstrahls (OS) während der akustisch-optischen Wechselwirkung unter Anwenden auf den akustischen piezoelektrischen Transducer (T) der akustisch-optischen Vorrichtung eines elektrischen Signals (E), das aus dem Generator (G) austritt, der durch einen Rechner (C) so programmiert ist, dass die durch den Verstärker (1) bei jedem der Durchgänge des Lichtimpulses eingebrachte Reduktion der Bandbreite kompensiert wird.

**2.** Verfahren nach Anspruch 1,
**dadurch gekennzeichnet, dass** es einen Adaptionskreis, umfassend eine Messung des optischen Spektrum am Ausgang des Hohlraums (10) des Verstärkers, und einen auf den Programmierkreis einwirkenden Gegenreaktionskreis, umfassend den oben genannten durch den Rechner (C) ferngesteuerten Generator (G), einschließt, um die Form des Spektrums der Lichtimpulse am Ausgang der Laserverstärkungskette derart zu modifizieren, dass das Spektrum mit der gewünschten Schablone konform ist.

**3.** Verfahren nach Anspruch 1,
**dadurch gekennzeichnet, dass** es einen Zug (9) von zwei Prismen (9a, 9b) umfasst, deren Spitzen bezüglich der Hauptachse des Verstärkungslaser-Hohlraums (10) invertiert sind, wobei der Zug, gelegen zwischen dem Hintergrundspiegel (3) des Hohlraums (10) und dem akustisch-optischen Kristall (8), die Kompensation der nicht linearen Variationen der Gruppenzeit in Funktion der optischen Frequenz der durch den akustisch-optischen Kristall (8) eingebrachten Lichtimpulse erlaubt.

**4.** Verfahren nach Anspruch 3,
**dadurch gekennzeichnet, dass** der Zug (9) von zwei Prismen (9a, 9b) zum Einen in den akustisch-optischen Kristall (8) und zum Anderen in den Hintergrundspiegel (3) des Verstärkungslaser-Hohlraums (10) integriert ist.

**5.** Verfahren nach einem der vorhergehenden Ansprüche,
**dadurch gekennzeichnet, dass** der akustisch-optische Kristall (8) ein Tellurdioxid-Kristall ist.

**6.** Vorrichtung zur Durchführung des Verfahrens nach Anspruch 1 zur Kontrolle der Breite des Wellenlängenspektrums der ultrakurzen Impulse, die sich in einer Laserverstärkungskette ausbreiten, umfassend, in dem Laser-Hohlraum (10) eines Verstärkers (1) mit mehreren Durchgängen, eine akustisch-optische programmierbare Vorrichtung, wobei

- die akustisch-optische programmierbare Vorrichtung dazu geeignet ist, die Breite des Spektrums eines Lichtimpulses bei jedem von seinen Durchgängen auf Grund einer kolinearen oder quasi-kolinearen Wechselwirkung in einem doppelbrechenden akustisch-optischen Kristall (8) zwischen dem Lichtimpuls und einem akustischen Strahl zu modifizieren; und wobei
- die Vorrichtung einen Programmierkreis des an den piezoelektrischen akustischen Transducer (T) der akustisch-optischen Vorrichtung angelegten elektrischen Signals (E) umfasst, wobei dieser Kreis einen Generator (G) des elektrischen Signals (E) umfasst, das von einem Rechner (C) so ferngesteuert wird, dass eine Filterung an dem Teil des direkten nicht gebrochenen Lichtstrahls (OS) während der akustisch-optischen Wechselwirkung durchgeführt wird, um die durch den Verstärker (1) bei jedem der Durchgänge des Lichtimpulses eingebrachte Bandbreitenreduktion auszugleichen.

**7.** Vorrichtung nach Anspruch 6,
**dadurch gekennzeichnet, dass** es einen Adaptionskreis, der eine Messung des optischen Spektrum am Ausgang des Hohlraums (10) des Verstärkers umfasst, und einen Gegenreaktionskreis, der auf den Programmierkreis einwirkt, der den oben genannten Generator (G) umfasst, der von dem Rechner (C) gesteuert wird, umfasst, um die Form des Spektrums der Lichtimpulse am Ausgang der Laserverstärkungskette derart zu modifizieren, dass das Spektrum mit der gewünschten Schablone konform ist.

**8.** Vorrichtung nach Anspruch 6,
**dadurch gekennzeichnet, dass** es einen Zug (9) von zwei Prismen (9a, 9b) umfasst, deren Spitzen bezüglich der Hauptachse des Verstärkungslaser-Hohlraums (10) invertiert sind,
wobei der zwischen dem Hintergrundspiegel (3) des Hohlraums (10) und dem akustisch-optischen Kristall (8) gelegene Zug die Kompensation der nicht linearen Variationen der Gruppenzeit in Funktion der optischen Frequenz der durch den akustisch-optischen Kristall (8) eingebrachten Lichtimpulse erlaubt.

**9.** Verfahren nach Anspruch 8,
**dadurch gekennzeichnet, dass** der Zug (9) von zwei Prismen (9a, 9b) einerseits in den akustisch-optischen Kristall (8) und andererseits in den Hintergrund-Spiegel (3) des Verstärkungslaser-Hohlraums (10) integriert ist.

**10.** Vorrichtung nach einem der Ansprüche 8 und 9,
**dadurch gekennzeichnet, dass** der akustisch-optische Kristall (8) ein Tellurdioxid-Kristall ist.

EP 1 604 435 B1

# FIG.1

# FIG.2

FIG.3

# FIG.4

# FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2810750 A, FASLITE
- US 3644015 A, John R. Hearn

- FR 2810750

**Littérature non-brevet citée dans la description**

- *J. Phys.IV France,* 2002, vol. 12
- **Verluise, F. et al.** Amplitude and phase control of ultrashort pulses by use of an acousto-optic programmable dispersive fileter. *Optics letters,* 15 Avril 2000, vol. 25 (8), 575-577

- **Verluise, F. et al.** *Conférence on lasers and electro-optics (CLEO,* 2000
- Technical Digest. 07 Mai 2000
- Trends in optics and photonics, (TOPS). *IEEE,* 07 Mai 2000, vol. 39, 442-443